# EUROPÄISCHE PATENTSCHRIFT

(11) **EP 0 780 580 B1**
(45) Veröffentlichungstag und Bekanntmachung des Hinweises auf die Patenterteilung: **12.02.2003**
(21) Anmeldenummer: 95810815.1
(22) Anmeldetag: 22.12.1995
(51) Int. Cl.: F15B 1/04, F16L 55/04

(54) **Vorrichtung zur Erzeugung von periodischen Impulsänderungen in einer Fluid-Strömung, Verfahren zum Betrieb der Vorrichtung und deren Verwendung**
Device for producing periodic impulse changes in a fluid flow, method for the operation and the use of the device
Dispositif pour générer des variations périodiques d'impulsions dans un courant de fluide, méthode pour l'opération du dispositif et utilisation de celui-ci

(43) Veröffentlichungstag der Anmeldung: 25.06.1997
(73) Patentinhaber: FESTO AG & Co, 73734 Esslingen (DE)
(72) Erfinder: Palffy, Sandor, Prof. Dr. h.c., CH-5400 Ennetbaden (CH)
(74) Vertreter: Abel, Martin, Dipl.-Ing.

(56) Entgegenhaltungen:
- DE-A- 4 240 323
- FR-A- 2 566 504
- US-A- 2 014 355
- ZEITSCHRIFT DES VEREINES DEUTSCHER INGENIEURE, Bd. 53, Nr. 37, 11.September 1909, BERLIN, Seiten 1490-1496, XP000571925 DONAT BANKI: "Ueber unrichtige Anwendung hydraulischer Sätze."

## Beschreibung

Die vorliegende Erfindung bezieht sich auf eine Vorrichtung gemäss dem Oberbegriff des Patentanspruchs 3 sowie auf ein Verfahren nach Anspruch 1 und die Verwendung der Vorrichtung nach den Ansprüchen 7 bis 10.

In der Strömungstechnik sind häufig periodisch pulsierende Strömungen notwendig um irgendwelche Mischvorgänge und/oder gezielte Strömungseffekte zu erreichen oder Ablösungen von Medien zu bewirken.

Notorisch bekannt sind hierfür mechanisch betätigte Schaltglieder, Klappen etc, welche teuer, störanfällig und oft auch energetisch ungünstig sind.

Demgegenüber blieb ein strömungstechnisches Phänomen ungenutzt, welches im Jahre 1909 vom ungarischen Maschineningenieur und Professor der TH Budapest Dónát Bänki entdeckt wurde (Bánki, Zeitschr. des Verein deutsch. Ingenieure, 1909, S. 1496, Kommissionsverlag: Julius Springer, Berlin).

Bánki beschreibt ein Rohr, welches aus einem Flüssigkeitsbehälter gespeist wird. An einer Stelle des Rohres ist ein sehr dünnwandiges Gummirohr eingeschaltet, dieses wird von einem Glasrohr grösseren Durchmessers umschlossen, in welchem ein vom äusseren Luftdruck verschiedener Druck erzeugt werden kann. Ein Überdruck kann mittels eines wassergefüllten Trichters eingestellt werden, der mit dem Raum durch eine Leitung verbunden ist und in beliebiger Höhe gehalten werden kann. Luftleere wird im Zwischenraum mittels eines Bunsen-Wasserstrahiejektors hergestellt. Durch die dünne Wand des Gummirohrs nimmt der Wasserstrahl den im umgebenden äusseren Raume herrschenden Druck an. Bei Erhöhung des Druckes tritt die bemerkenswerte, gleichsam widersinnige Erscheinung ein, dass sich das Rohr unter äusserem Druck erweitert. Bei den Versuchen ist das äusserst dünnwandige Gummirohr der starken Vibrationen halber meistens geplatzt, es ist aber öfters gelungen, die Erweiterung herbeizuführen. Wenn im Zwischenraum Luftleere, also im Rohr Überdruck herrschte, hat sich das Rohr stets zusammengezogen.

Dieses Paradoxon - es steht in einem scheinbaren Widerspruch zur Bernoulli Gleichung - wurde nicht näher untersucht, technische Anwendungen wurden auch ansatzweise keine gefunden.

Es ist Aufgabe der Erfindung, eine Vorrichtung und ein Verfahren zu schaffen, welche ohne den Einsatz von Schalt-Ventilen oder dgl., eine periodische Impulsänderung in einer Fluid-Strömung bewirken. Der Erfindungsgegenstand soll wirtschaftlich herstellbar sein und nur eine minimale Wartung erfordern. Er soll sich zudem leicht in eine Druckleitung integrieren lassen.

Erfindungsgemäss ist diese Vorrichtung und dieses Verfahren durch die Merkmale des Anspruchs 3 bzw. 1 definiert.

Der im Patentanspruch verwendete Begriff "Druck" kann sowohl, auf die Umgebung bezogen, ein Überdruck, als auch ein Unterdruck (Vakuum) sein, der auf das elastische Zwischenglied wirkt.

Der Erfindungsgegenstand bewirkt periodische Schwingungen, welche im Abström-Abschnitt periodische, niederfrequente Druckschwingungen induzieren; es entsteht eine stark pulsierende Strömung, welche bis zur Kavitation (Dampfblasenbildung) führen kann.

Durch das elastische Zwischenglied wird dem Fluid ein Druck aufgeprägt, der das entsprechend der notorisch bekannten Bernoulli-Gleichung eingestellte Energiegleichgewicht innerhalb der stationären Strömung beeinflusst.

Infolge der im elastischen Zwischenglied resultierenden Querschnittsänderung wird die Kontinuität des Massen- und Energieflusses temporär gestört, d.h. diese werden destabilisiert, so dass ein fluid-mechanischer Schwingkreis entsteht. Die resultierende Impulsfrequenz ist dementsprechend von den mechanischen Parametern des Systems abhängig und zeigt die Eigenschaften eines Resonanzkreises.

In nachfolgenden abhängigen Ansprüchen sind vorteilhafte Weiterbildungen des Erfindungsgegenstandes beschrieben.

Ein membranartiges Zwischenglied gemäss Anspruch 3 erlaubt eine einfach zu realisierende Anpassung an bestehende Konfigurationen und Leitungssysteme.

Die Dimensionierung des Zwischengliedes bzw. des Fensters kann Anspruch 4 entnommen werden, wobei die Fenstergrösse nach oben durch die notwendige Befestigung der Membrane am Zuström-Abschnitt beschränkt ist.

Durch zwei einander gegenüberliegende Fenster, Anspruch 5, lässt sich der Pulsationshub (Amplitude) in einfacher Weise vergrössern.

Durch eine Auswahl des Materials der Membranen nach Anspruch 6, lässt sich der Pulsationshub des Fluids zusätzlich optimieren.

Besonders einfach und wirtschaftlich ist ein Verfahren nach Anspruch 1, welches keine Hilfsaggregate, wie zusätzliche Druckquellen, Verdichter etc. erfordert.

Durch eine Druckeinstellung gemäss dem Verfahren nach Anspruch 1 kann die Pulsations-Frequenz der Strömung gesteuert werden.

Die Ausbildung von Wirbelringen, Anspruch 7, dient beispielsweise dem Lufttransport in klimatisierten Räumen; sie ergibt Luftpakete.

Besonders günstig ist die Verwendung der Vorrichtung in Verbindung mit biologischen Prozessen, beispielsweise solchen, die in einer Kläranlage ablaufen, Anspruch 8.

Die hohe Impulsleistung ermöglicht die Unterstützung von Lösungs- und Mischvorgängen, Anspruch 9, selbst in Fällen die bisher einen Einsatz von Ultraschall- und/oder Spezialrührer erforderlich machten.

Die Verwendung nach Anspruch 10 ist energetisch günstig und ermöglicht die Realisierung von Transporten, welche aufgrund der notwendigen Luftversorgung bisher nicht, oder nur unter Schwierigkeiten möglich waren.

Anhand von untersuchten Ausführungsbeispielen wird nachfolgend der Erfindungsgegenstand beispielsweise erläutert. In sämtlichen Figuren sind gleiche Funktionsteile mit gleichen Bezugsziffern versehen.

Es zeigen:
- Fig. 1a: eine schematische Schnittdarstellung einer rotationssymetrischen Ausführungsform des erfindungsmäßigen Verfahrens zur Erzeugung von periodischen Druckschwingungen,
- Fig. 1b: die Darstellung Fig. 1a im Schnitt, entlang der Linie A - A
- Fig. 2: eine weitere Ausführungsform des erfindungsmäßigen Verfahrens zur Belüftung von Wasser bzw. zur Unterstützung von Mischvorgängen,
- Fig. 3: die Prinzipdarstellung eines erfindungsmäßigen Verfahrens zur Erzeugung eines pulsierenden Durchflusses, ohne zusätzliche Hilfsenergie und
- Fig. 4: eine erfindungsmäßige Vorrichtung mit einem kastenförmigen Zwischenglied mit einer Flachmembrane.

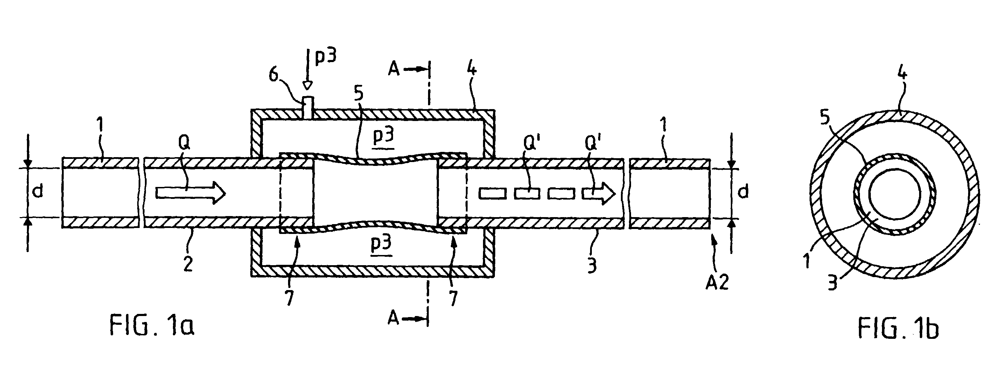

In Fig. 1a ist mit 1 eine übliche Druckleitung eines Druckmittelnetzes, beispielsweise eines Druckluftnetzes bezeichnet; die Druckleitung 1 weist einen konstanten Innendurchmesser d auf. Als Ausflussdüse dient das Teil A2 des Abströmabschnitts.

In einem Zuström-Abschnitt 2 der Druckleitung 1 ist ein kontinuierlicher Durchfluss Q zu beobachten.

In Flussrichtung (mit Pfeilen bezeichnet) betrachtet befindet sich ein am Abschnitt 2 druckdicht aufgesetzter Hohlkörper, eine Druckkammer 4, welche ein elastisches Zwischenglied 5 enthält. Das Zwischenglied 5 seinerseits ist an einer umlaufenden Fixierstelle 7 in bekannter Weise gasdicht befestigt und in gleicher Weise mit einem anschliessenden Abström-Abschnitt 3 der Druckleitung 1, gleichen Durchmessers d, verbunden.

Die Druckkammer 4 weist zudem einen Steuerungs-Anschluss 6 auf, welcher erlaubt, das Zwischenglied 5 mit einem Druck p3 zu beaufschlagen.

Geschieht dies durch einen Überdruck p3 so entsteht eine pulsierende Strömung charakterisiert durch den unterbrochenen Durchfluss Q' im Abschnitt 3 der Druckleitung 1.

Ein gleichartiger pulsierender Durchfluss Q' entsteht auch bei einem Unterdruck p3.

Die Schnittdarstellung Fig. 1b zeigt die konzentrische Anordnung Fig. 1a nochmals.

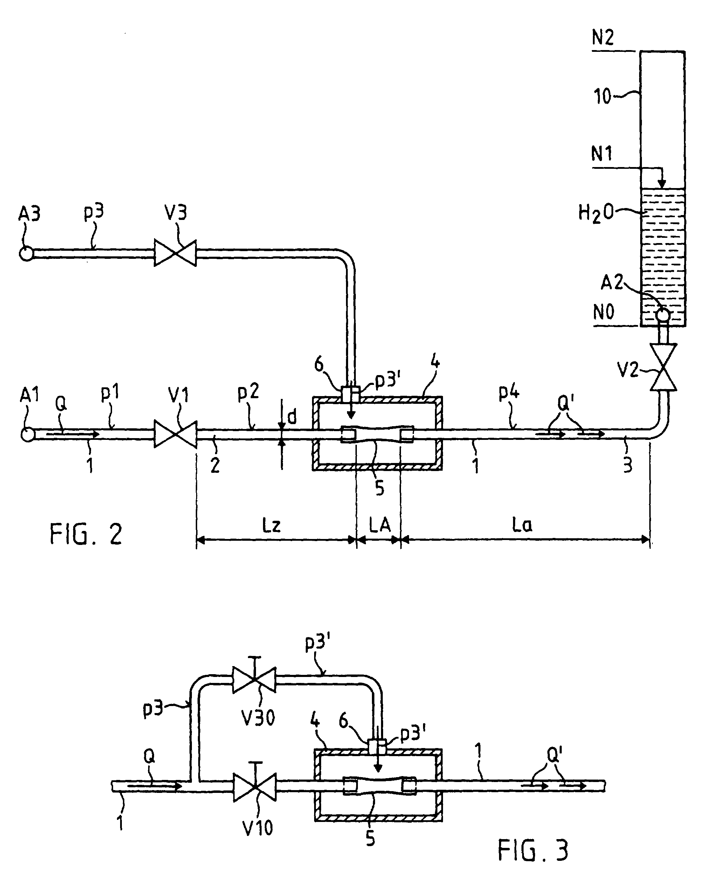

Gemäss Fig. 2 weist eine Belüftungsvorrichtung ein Gefäss 10 auf; der Gefässboden befindet sich auf dem Null-Niveau N0, es ist mit Wasser gefüllt, die aktuelle Füllhöhe ist N1, die maximale Füllhöhe ist mit N2 bezeichnet. Im Gefässboden befindet sich eine Ausfluss-Düse A2 durch welche pulsierende Druckluft strömt. Der Düse A2 ist ein Absperr-Reduzierventil V2 vorgeschaltet.

Eine Druckleitung 1 ist mit einem Anschluss A1 versehen, der mit einer nicht dargestellten Druckquelle verbunden ist, wobei diese Druckleitung 1 wiederum durch einem Innendurchmesser d und einen Fluid-Durchfluss Q und einen Netzdruck p1 charakterisiert ist. Ein erstes Absperr-Reduzierventil V1 ist in einem Abstand Lz vom rechtsseitigen Ende des Zuström-Abschnitts 2 entfernt angeordnet; die Leitungslänge im Abström-Abschnitts 3 bis zum zweiten Absperr-Reduzierventil V2 beträgt La. Der Abstand zwischen den beiden Abschnitten, d.h. die aktive Länge des Zwischenglieds 5 ist LA.

Wiederum ist das Zwischenglied 5 durch einen Hohlkörper 4 umschlossen, in welchem ein Steuerungs-Anschluss 6 mündet.

Mit dem Steuerungs-Anschluss 6 ist eine Leitung verbunden, welche nach einem Steuerdruck-Regulierventil V3 einen Steuerdruck p3' aufweist. Als Steuerungsquelle dient ein externer Anschluss A3, welcher mit einer an sich beliebigen Druckquelle verbunden ist.

Im Zuström-Abschnitt 2 wird ein Druck p2 und im Abström-Abschnitt 3 ein Druck p4 festgestellt. Der Druck p4 verläuft impulsförmig und fördert den entsprechenden Durchfluss Q'.

Eine gegenüber Fig. 2 vereinfachte Anordnung Fig. 3 besitzt wiederum eine Druckleitung 1 mit einem Durchfluss Q, von welcher ein Bypass abzweigt der einen Steuerdruck p3 aufweist, der über ein Reduzierventil V30 auf die Grösse p3' vermindert wird. Innerhalb der Druckleitung 1 befindet sich ein weiteres Reduzierventil V10; die übrige Anordnung ist analog zu Fig. 2 ausgebildet.

Im praktischen Versuch hat es sich gezeigt, dass die Schwingungsfrequenz des pulsierenden Durchflusses Q primär vom Steuerdruck p3' abhängt, dass sich aber die resultierende Grundfrequenz umgekehrt proportional zur Leitungslänge La im Abström-Abschnitt 3 verhielt. Das Einschalten einer Ausflussdrossel, d.h. der Ausflussdüse A2 bewirkte offensichtlich Reflexionen, die Grundfrequenz wurde verdoppelt. Die nachfolgenden Beziehungen wurden festgestellt und dienen einer Abschätzung der theoretischen Schwingungsfrequenz fₜₕ bei einem System mit dem Fluid Luft:

| Ohne Ausflussdrossel | Mit Ausflussdrossel |
|---|---|
| fₜₕ = c / (4 · L_{ab}) | fₜₕ = c / (2 · Lab) |
| c = Schallgeschwindigkeit im System | |

Der Innendurchmesser d der Druckleitung betrug 26 mm; die aktive Länge LA des Zwischengliedes 100 mm; die Leitungslänge im Zuströmabschnitt 1'000 mm; die Leitungslänge La im Abström-Abschnitt 550 mm und der Durchmesser der als Drossel wirkenden Ausflussdüse A2 war 13 mm.

Es liessen sich typische Grundfrequenzen von 30 Hz bis 400 Hz einstellen, wobei der Netzdruck p1 von 2,0 bar bis 8,0 bar und der Steuerdruck p3' von 10 mbar bis 300 mbar variiert wurden.

Während im vorgängig beschriebenen Versuch Luft von Raumtemperatur zur periodischen Pulsation angeregt wurde, beziehen sich die nachfolgenden Angaben auf Wasser von 18 °C.

Die resultierende Pulsations-Frequenz, erzeugt mit einer analogen Vorrichtung, betrug dabei lediglich 5 bis 25 Hz. Dabei wurde der Steuerdruck p3' zwischen 10 bis 500 mbar variiert. Der Netzdruck betrug 2 bis 8 bar.

Die weitere Vorrichtung nach Fig. 3 erfordert einen geringeren apparativen Aufwand und ist daher besonders wirtschaftlich in ihrer Herstellung und in ihrem Unterhalt.

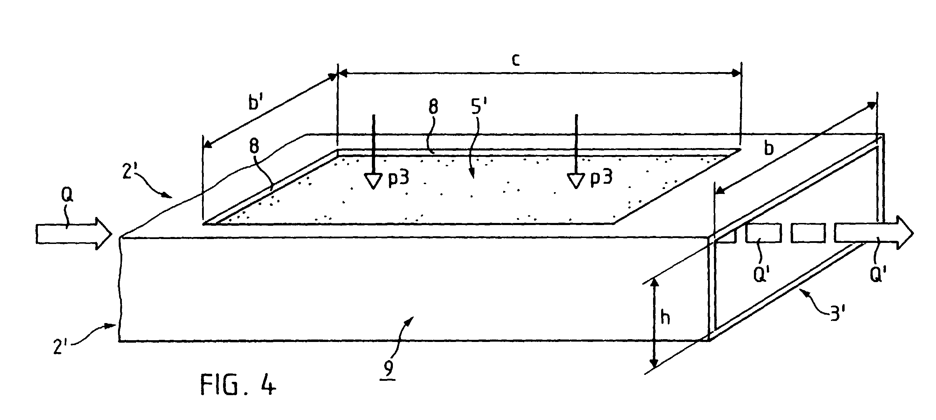

In analoger Weise lassen sich kanalförmig geführte Fluids periodisch in ihrem Durchfluss steuern, vgl. Fig. 4.

Ein üblicher Kanal ist als Träger 9 für ein Zwischenglied 5' ausgebildet und weist einen kastenförmigen Zuström-Abschnitt 2' und einen gleichartigen Abström-Abschnitt 3' auf. Die Durchflusshöhe ist mit h bezeichnet; die Durchflussbreite mit b. In der oberen Wand des Trägers 9 ist ein rechteckförmiges Fenster 8 ausgeschnitten, mit einer Öffnungslänge c und einer Breite b'. Druckdicht verschlossen ist dieses Fenster 8 mit einer Gummi-Membrane 5', welche in geeigneter Weise mit einem Steuerdruck p3 beaufschlagt ist.

Der kanalförmige Träger 9 besitzt den Vorteil, dass ein Anschluss für den Steuerdruck p3, aufgrund der ebenen Flächen, sehr leicht über Flansche und/oder direkt über Rohrleitungen zuführbar ist.

In sämtlichen Versuchen wurden elastischen Zwischenglieder aus handelsüblichem Butylkautschuk (Lieferant Maloya Vredestein AG, CH-4460 Gelterkinden) eingesetzt; die Standzeit dieses Membranmaterials könnte durch geeignete Armierungen, welche dem Deformationsweg angepasst sind, zusätzlich erhöht werden.

Selbstverständlich lässt sich der Erfindungsgegenstand auch an gekrümmte Leitungssysteme anpassen.- Ebenso kann der obigen Darstellung entnommen werden, dass elastische Dehn- und Ausgleichsglieder, wie sie in Rohrleitungen zur Kompensation von Wärmedehnungen eingesetzt werden, Schwingungen im Fluid bewirken können und daher oft die Ursache von ungeklärten Leitungsbrüchen sind.

### Bezeichnungsliste

- 1: Druckleitung
- 2, 2': Zuström-Abschnitt
- 3, 3': Abström-Abschnitt
- 4: Hohlkörper / Druckkammer
- 5, 5': Zwischenglied / Membrane (elastisch)
- 6: Steuerungs-Anschluss
- 7: Fixierstellen
- 8: Fenster
- 9: Trägerteil (Kanal) für Zwischenglied 5'
- 10: Gefäss (belüftet)

- A1: Anschluss an Quelle 1 (Netz)
- A2: Ausflussdüse / Drossel
- A3: Anschluss an Steuerungsquelle

- b: Durchflussbreite von 9
- b': Breite des Fensters (Öffnung)
- d: Innendurchmesser der Druckleitung 1
- c: aktive Membranlänge
- fₜₕ: theoretische Pulsfrequenz (Schätzwert)
- h: Durchflusshöhe von 9

- LA: aktive Länge des Zwischengliedes 5
- La: Leitungslänge im Abström-Abschnitt
- Lz: Leitungslänge im Zustrom-Abschnitt

- N0: Null-Niveau (Gefässboden)
- N1: Füllhöhe
- N2: Max. Füllhöhe

- p1: Netzdruck (von A1)
- p2: reduzierter Netzdruck
- p3: Steuerdruck
- p3': reduzierter Steuerdruck

- p4: Gegendruck

- Q: Durchfluss (Vektor)
- Q': pulsierender Durchfluss

- V1: erstes Absperr-/Reduzierventil
- V2: zweites Absperr-/Reduzierventil
- V3: Steuerdruck-Regulierventil
- V10: Reduzierventil (Druckleitung)
- V30: Reduzierventil (Steuerleitung)

## Patentansprüche

1. Verfahren zur Erzeugung einer periodisch pulsierenden Strömung in einer Druckleitung mittels einer Vorrichtung bestehend aus
einem in der Druckleitung vorhandenen Zuström-Abschnitt und einem Abström-Abschnitt,
einem Zwischenglied mit einer Membrane aus einem elastischen, druckbeständigen Material und
Mittel zur Druckbeaufschlagung des Zwischenglieds,
**dadurch gekennzeichnet,**
**dass** der Zuström-Abschnitt an ein Drucknetz angeschlossen wird und dass das Zwischenglied mit einem konstanten oder variierenden Steuerdruck beaufschlagt wird, so dass eine Pulsationsfrequenz im Abström-Abschnitt zwischen 5 Hz und 400 Hz resultiert.

2. Verfahren nach Anspruch 1, **dadurch gekennzeichnet, dass** in der Druckleitung, im Zuström-Abschnitt, eine Drossel vorgesehen ist, dass vor dieser Drossel von der Druckleitung ein Strömungspfad abgenommen und dem Zwischenglied zugeführt wird.

3. Vorrichtung zur Erzeugung einer periodisch pulsierenden Strömung in einer Druckleitung bestehend aus
einem in der Druckleitung vorhandenen Zuström-Abschnitt (2') und einem Abström-Abschnitt (3'),
einem Zwischenglied (5') mit
einer Membrane aus einem elastischen, druckbeständigen Material und
Mittel zur Druckbeaufschlagung des Zwischenglieds,
**dadurch gekennzeichnet,**
**dass** zumindest der Zuström-Abschnitt (2') kastenförmig ausgestaltet ist, dass in einem anschliessenden Trägerteil (9), in Strömungsrichtung wenigstens ein Fenster (8) ausgespart ist, dass dieses Fenster (8) durch eine elastische Membrane (5') dicht verschlossen ist, und dass der äussere Druck (p3) auf diese Membrane (5') beaufschlagt ist, wobei das Fenster aufgrung seiner abenen Ausbildung als Anschlußmittel für die Zuführung von Druck aus einem Leitungssystem geeignet ist.

4. Vorrichtung nach Anspruch 3, **dadurch gekennzeichnet, dass** der Zuström-Abschnitt (2') eine Breite (b) aufweist, welche ein Vielfaches der Höhe (h) ist und dass das Fenster (8) eine Breite (b') aufweist, welche zumindest das 0,7-fache der Breite (b) beträgt und dass die Länge (c) dieses Fensters (8) zumindest dem Mass der Höhe (h) des Trägerteils (9) entspricht.

5. Vorrichtung nach Anspruch 3 oder 4, **dadurch gekennzeichnet, dass** im Trägerteil (9) zumindest zwei einander gegenüber liegende Fenster (8) vorgesehen sind.

6. Vorrichtung nach Anspruch 5, **dadurch gekennzeichnet, dass** die Deformationsfähigkeit der Membranen (5') derart gewählt ist, dass diese im beaufschlagten Zustand und/oder im Betrieb einander tangieren.

7. Anwendung des Verfahrens nach einem der Ansprüche 1 bis 2 zur Bildung von Wirbelringen.

8. Anwendung der Verfahrens nach einem der Ansprüche 1 bis 2 zur Belüftung von Fermentationsanlagen und/oder aeroben biologischen Prozessen.

9. Anwendung des Verfahrens nach einem der Ansprüche 1 bis 2 zur Unterstützung von Lösungs- und Mischvorgängen wie Gas zu Gas oder Gas zu Flüssigkeit oder Flüssigkeit zu Flüssigkeit.

10. Anwendung des Verfahrens nach einem der Ansprüche 1 bis 2 zur Reduktion des Luftverbrauchs in Transportvorrichtungen mit Luftkissen.

## Claims

1. Method for the generation of a periodically pulsating flow in a pressure line by means of an apparatus comprising:
an inlet flow section provided in the pressure line and an outlet flow section,
an intermediate element with a membrane made of a flexible, pressure-resistant material, and
means for the pressurisation of the intermediate link,
**characterised in that**
the inlet flow section is connected to a pressure network and **in that** the intermediate element is subjected to a constant or variable control pressure, resulting in a pulsation frequency between 5 Hz and 400 Hz in the outlet flow section.

2. Method according to claim 1, **characterised in that** a restrictor is provided in the pressure line in the inlet flow section and **in that**, upstream of said restrictor, a flow path is taken from the pressure line to lead to the intermediate element.

3. Apparatus for the generation of a periodically pulsating flow in a pressure line, comprising:
an inlet flow section (2') provided in the pressure line and an outlet flow section (3'),
an intermediate element (5') with a membrane made of a flexible, pressure-resistant material, and
means for the pressurisation of the intermediate link,
**characterised in that**
at least the inlet flow section (2') has a box-shaped design, **in that** at least one window (8) is provided in an adjacent support part (9) in the direction of flow, **in that** said window (8) is tightly sealed by a flexible membrane (5'), and **in that** the external pressure (p3) acts on said membrane (5'), the window, owing to its flat design, being a suitable connecting means for the admission of pressure from a line system.

4. Apparatus according to claim 3, **characterised in that** the inlet flow section (2') has a width (b) which is a multiple of the height (h), **in that** the window (8) has a width (b') of at least 0.7 times the width (b), and **in that** the length (c) of the window (8) is at least equal to the height (h) of the support part (9).

5. Apparatus according to claim 3 or 4, **characterised in that** at least two windows (8) lying opposite each other are provided in the support part (9).

6. Apparatus according to claim 5, **characterised in that** the deformability of the membranes (5') is so chosen that they touch each other under pressure and/or in operation.

7. Application of the method according to any of claims 1 to 2 in the generation of vortex rings.

8. Application of the method according to any of claims 1 to 2 for the ventilation of fermentation plant and/or aerobic biological processes.

9. Application of the method according to any of claims 1 to 2 for the support of solution and mixing processes, for instance gas and gas, gas and fluid or fluid and fluid

10. Application of the method according to any of claims 1 to 2 for reducing air consumption in conveying devices operating with air cushions.

## Revendications

1. Procédé pour produire un courant à pulsations périodiques dans une conduite sous pression au moyen d'un dispositif constitué
d'un tronçon d'arrivée se trouvant dans la conduite sous pression et d'un tronçon d'écoulement,
d'un organe intermédiaire avec
une membrane constituée d'une matière élastique résistant à la pression et
des moyens pour exercer une pression sur l'organe intermédiaire,
**caractérisé**
**en ce que** le tronçon d'arrivée est raccordé à un réseau de pression et en ce que l'organe intermédiaire est soumis à une pression de commande constante ou variable, de sorte qu'il en résulte une fréquence de pulsations dans le tronçon d'écoulement comprise entre 5 Hz et 400 Hz.

2. Procédé selon la revendication 1, **caractérisé en ce que** dans la conduite sous pression, dans le tronçon d'arrivée, il est prévu un organe d'étranglement, **en ce qu'**en amont de cet organe d'étranglement une veine d'écoulement est prélevée de la conduite sous pression et acheminée vers l'organe intermédiaire.

3. Dispositif pour produire un courant à pulsations périodiques dans une conduite sous pression constitué
d'un tronçon d'arrivée (2') se trouvant dans la conduite sous pression et d'un tronçon d'écoulement (3'),
d'un organe intermédiaire (5') avec
une membrane constituée d'une matière élastique résistant à la pression et
des moyens pour exercer une pression sur l'organe intermédiaire,
**caractérisé**
**en ce qu'**au moins le tronçon d'arrivée (2') est en forme de caisson, en ce que dans une partie de support (9) suivante est découpée, dans le sens d'écoulement, au moins une fenêtre (8), en ce que cette fenêtre (8) est fermée de manière étanche par une membrane élastique (5'), et en ce que la pression extérieure (p3) agit sur cette membrane (5'), la fenêtre convenant, en raison de sa conformation plane, comme moyen de raccordement pour l'alimentation en pression à partir d'un système de conduites.

4. Dispositif selon la revendication 3, **caractérisé en ce que** le tronçon d'arrivée (2') présente une largeur (b) qui est un multiple de sa hauteur (h) et **en ce que** la fenêtre (8) présente une largeur (b') qui représente au moins 0,7 fois la largeur (b) et **en ce que** la longueur (c) de cette fenêtre (8) correspond au moins à la valeur de la hauteur (h) de la partie de support (9).

5. Dispositif selon la revendication 3 ou 4, **caractérisé en ce que** dans la partie de support (9) sont prévues au moins deux fenêtres (8) disposées l'une face à l'autre.

6. Dispositif selon la revendication 5, **caractérisé en ce que** la capacité de déformation des membranes (5') est choisie de manière qu'à l'état sollicité et/ou en fonctionnement, elles se touchent l'une l'autre.

7. Utilisation du procédé selon l'une des revendications 1 ou 2, pour former des anneaux de tourbillonnement.

8. Utilisation du procédé selon l'une des revendications 1 ou 2, pour aérer des installations de fermentation et/ou des processus biologiques aérobies.

9. Utilisation du procédé selon l'une des revendications 1 ou 2, pour favoriser des processus de dissolution et de mélange tels que de gaz à gaz ou de gaz à liquide ou de liquide à liquide.

10. Utilisation du procédé selon l'une des revendications 1 ou 2, pour réduire la consommation d'air dans des dispositifs de transport à coussins d'air.
